# DEMANDE DE BREVET EUROPEEN

(11) **EP 4 455 112 A1**
(43) Date de publication de la demande: **30.10.2024**
(21) Numéro de dépôt: 24171526.7
(22) Date de dépôt: 22.04.2024
(51) Int. Cl.: C05F 17/907

(54) **BAC DE COMPOSTAGE BIODEGRADABLE**

(30) Priorité: 24.04.2023 FR 2304109
(71) Demandeur: DS SMITH PACKAGING FRANCE S.A.S., 92800 Puteaux (FR)
(72) Inventeur: STAEBLER, Teddy, 92800 PUTEAUX (FR)
(74) Mandataire: Vanzini, Christian

(57) **Abrégé**

L'invention concerne un bac de compostage (10) réalisé à partir d'un flan en papier ou en carton prédécoupé, et comportant :
- un fond (20),
- une paroi latérale (30) qui s'étend à partir d'un bord périphérique du fond, d'un premier côté du fond, et qui délimite avec le fond un volume (V1) d'accueil de matière à composter, et
- au moins un pied (40) qui s'étend à partir du fond, d'un côté opposé au premier côté,

Selon cette invention, la paroi latérale et le fond présentent chacun au moins une ouverture d'aération.

## Description

### DOMAINE TECHNIQUE DE L'INVENTION

La présente invention concerne de manière générale le compostage de déchets organiques.

Elle concerne plus particulièrement un bac de compostage prévu pour recevoir de tels déchets.

### ETAT DE LA TECHNIQUE

On cherche actuellement à réduire le volume de déchets à traiter en décharge.

Dans ce but, une solution consiste à demander aux habitants d'éliminer euxmêmes les déchets organiques (typiquement les déchets alimentaires) par le biais du compostage.

Le compostage peut être réalisé à chaud (c'est-à-dire à une température supérieure à 60°C) ou à froid (à température ambiante). Dans tous les cas, il requiert certaines conditions de température et d'hygrométrie.

Dans le cadre du compostage domestique, seul le compostage à froid est envisageable, mais il réclame une forte hygrométrie et une bonne aération pour éviter la putréfaction des déchets (c'est-à-dire la décomposition anaérobie des déchets) et la libération d'odeurs désagréables.

Il est alors connu d'utiliser un bac de compostage en matière plastique non biodégradable dans lequel sont jetés les déchets qui doivent ensuite être régulièrement arrosés et retournés.

On comprend qu'un tel bac ne saurait être installé dans un local d'habitation mais doit au contraire être placé en extérieur, dans le jardin ou sur un balcon. L'inconvénient est donc que l'usager de ce bac est contraint de sortir régulièrement de chez lui pour jeter ses déchets.

### PRESENTATION DE L'INVENTION

La présente invention propose pour sa part un bac de compostage qui est lui-même compostable et qui peut être installé provisoirement en intérieur.

Plus particulièrement, on propose selon l'invention un bac de compostage réalisé à partir d'un flan en papier ou en carton prédécoupé, comportant :
- un fond,
- une paroi latérale qui s'étend à partir d'un bord périphérique du fond, d'un premier côté du fond, et qui délimite avec le fond un volume d'accueil de matière à composter,
- au moins un pied qui s'étend à partir du fond, d'un côté opposé au premier côté, la paroi latérale et le fond présentent chacun au moins une ouverture d'aération.

Ce bac en papier ou carton peut recevoir des déchets. Grâce à ses ouvertures dans le fond et dans la paroi latérale, les déchets peuvent s'aérer ce qui évite leur putréfaction et donc l'apparition d'odeurs désagréables.

Une fois rempli, ce bac peut être entièrement jeté dans un containeur de compostage plus grand, de façon que lui-même et les déchets qu'il contient puissent intégralement se composter.

Ce bac évite ainsi à l'usager de devoir sortir de son habitation dès qu'il a des déchets organiques à jeter.

D'autres caractéristiques avantageuses et non limitatives du bac de compostage conforme à l'invention, prises individuellement ou selon toutes les combinaisons techniquement possibles, sont les suivantes :
- ladite paroi latérale comporte plusieurs pans dans chacun desquels il est prévu au moins une ouverture d'aération ;
- lesdites ouvertures d'aération forment entre 10 et 40% de la surface totale de la paroi latérale ;
- au moins une desdites ouvertures d'aération est prévue dans une moitié de la paroi latérale située à l'opposé du fond ;
- la paroi latérale présente un bord inférieur et un bord supérieur, ainsi que des lignes de découpe à mi-chair situées à distance des bord inférieur et bord supérieur ;
- ladite paroi latérale comportant plusieurs pans ;
- il est prévu au moins deux lignes de découpe à mi-chair qui forment un X sur au moins un desdits pans ;
- il est en outre prévu un couvercle adapté à fermer la paroi latérale d'un côté opposé audit fond ;
- le couvercle comporte une paroi pleine qui ferme entièrement ledit volume ;
- il est prévu quatre pieds distincts ;
- le flan est formé d'un seul tenant.

L'invention porte par ailleurs sur un ensemble comportant un bac de compostage tel que précité, et un sac en matière composable de dimensions inférieures ou égales à celles dudit volume.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un bac de compostage conforme à l'invention, mis en volume ;
[Fig. 2] est une vue sous un autre angle du bac de compostage de la figure 1 ;
[Fig. 3] est une vue schématique en plan d'un flan prédécoupé à partir duquel est fabriqué le bac de compostage de la figure 1.

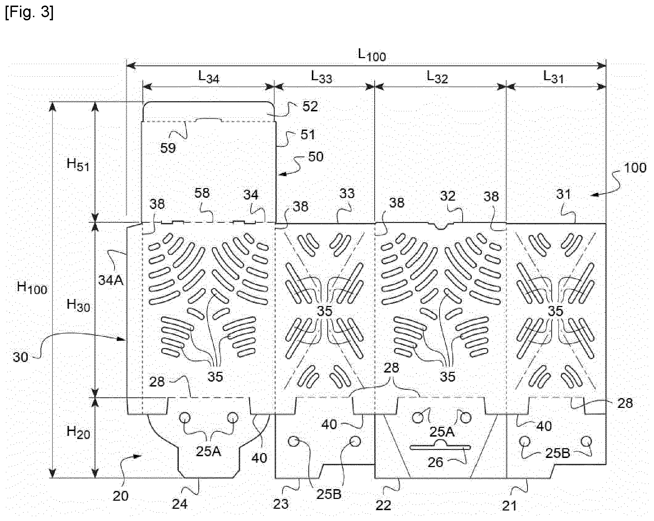

Sur la figure 3, on a représenté un flanc 100 prédécoupé.

A titre préliminaire, on notera que sur le plan de la figure 3, les traits pleins représentent des lignes de découpe tandis que les traits en pointillés représentent des lignes de pré-pliage (ci-après appelées « lignes de pliage »). Ainsi, les lignes en pointillés illustrent des lignes de pliage formées de manière à permettre le pliage du flanc 100 d'un côté du plan (pour les grands pointillés) ou de l'autre côté du plan (pour les petits pointillés).

Une ligne de découpe est une ligne selon laquelle la matière est découpée de part en part.

Une ligne de pliage est une zone de moindre résistance permettant de s'assurer que la pliure entre deux panneaux se fasse à la position souhaitée. Elle peut être réalisée de diverses manières. Lorsque les panneaux sont réalisés dans une feuille de carton multicouche, elle peut ainsi être réalisée par rainage, au moyen d'une presse, ou encore par découpe à mi-chair. L'opération de rainage consiste à enfoncer la feuille de carton multicouche le long de la ligne souhaitée. L'opération de découpe à mi-chair consiste à découper une partie seulement des feuilles de carton le long de cette ligne.

Chaque ligne de pliage peut en variante être réalisée d'autres manières, typiquement en alternant des lignes de rainage ou de découpe à mi-chair avec des lignes de découpe ou de prédécoupe.

On notera enfin sur cette figure que les traits mixtes représentent des lignes de découpe à mi-chair distinctes des lignes de pliage précitées. Elles s'en distinguent notamment puisqu'elles ne s'étendent pas d'un bord à l'autre du flan 100 si bien que lors de la mise en volume de ce flan, elles ne serviront pas de lignes de pliage.

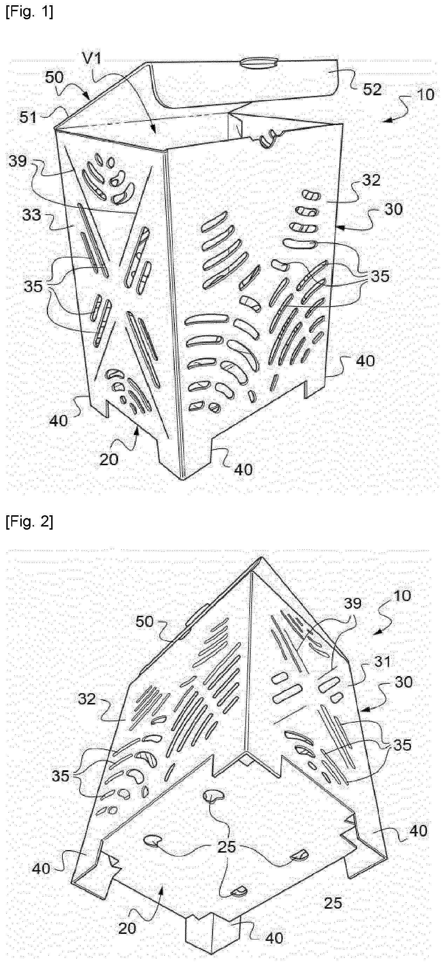

Sur les figures 1 et 2, on a représenté sous deux angles différents un même bac de compostage 10 conforme à l'invention.

Ce bac de compostage 10 est de préférence réalisé d'une seule pièce, à partir du flanc 100 prédécoupé en papier ou en carton illustré sur la figure 3.

Dans le mode de réalisation ici considéré, le bac de compostage 10 est issu d'une opération de découpe et pliage d'une unique pièce de carton multicouche, comprenant deux feuilles planes et une feuille ondulée prise en sandwich entre ces deux feuilles planes.

Le bac de compostage 10 forme un réceptacle conçu pour recevoir des déchets organiques.

Il comporte à cet effet une paroi latérale 30 à quatre pans 31, 32, 33, 34 articulés les uns par rapport aux autres par des lignes de pliage 38 parallèles entre elles de sorte que ces pans, une fois pliés à angle droit deux à deux, forment une ceinture fermée.

Ces quatre pans 31, 32, 33, 34 présentent ici des formes rectangulaires. Ils présentent des formes identiques par paires opposées, deux pans 32, 34 étant plus larges que les deux autres.

Comme le montre en figure 3 la vue du flanc 100 prédécoupé, ces quatre pans 31, 32, 33, 34 sont initialement situés côte-à-côte. A l'une des extrémités de cette succession de pans, il est prévu un panneau de liaison 34A qui se rattache à un dernier des pans 34 par une ligne de pliage 38 et qui est prévu pour être collé au premier des pans 31 afin de former la ceinture.

Sur chaque pan est articulé un rabat inférieur 21, 22, 23, 24, via une ligne de pliage 28. Les rabats inférieurs 21, 22, 23, 24 sont prévus pour coopérer entre eux afin de former le fond 20 du bac de compostage 10.

Leurs formes sont différentes, notamment pour faciliter le pliage du flan 100. On pourrait prévoir que ces rabats présentent des formes telles qu'ils peuvent s'imbriquer, ou qu'ils soient simplement collés ensemble afin de former un fond solide. Dans le mode de réalisation illustré, l'un des rabats inférieurs 24 forme à son extrémité une languette prévue pour s'emboîter dans une ouverture 26 prévue en correspondance dans le rabat inférieur 22 opposé (voir figure 3), si bien qu'aucun adhésif n'est nécessaire.

Une fois le flanc 100 prédécoupé mis en volume, la paroi latérale 30 s'élève à partir du bord périphérique du fond 20. Ainsi, la paroi latérale 30 et le fond 20 délimitent ensemble un volume V1 de réception de déchets.

Ici, le bac de compostage 10 comporte au moins un pied 40 en saillie du fond, du côté inférieur de ce dernier (à l'opposé de la paroi latérale 30). Ce pied permet de surélever le bac de compostage 10 par rapport au plan de travail sur lequel il est posé, pour permettre une meilleure aération du contenu du bac.

On pourrait prévoir un seul pied en position centrale sous le fond 20.

En pratique, il comporte de préférence au moins trois pieds pour garantir la stabilité du bac. Ici, il en comporte exactement quatre, répartis aux quatre coins du fond 40.

Ces pieds 40 sont situés dans le prolongement des pans de la paroi latéral 30. Ils présentent des bords inférieurs situés à distance des lignes de pliage 28 des rabats inférieurs 21, 22, 23, 24.

Ainsi, comme le montre en figure 3 la vue du flanc 100 prédécoupé, chaque pied 40 est délimité par trois lignes de découpe en U, dont une ligne centrale qui forme le bord inférieur du pied et deux lignes latérales qui s'étendent jusqu'aux extrémités des lignes de pliage 28 voisines.

Autrement formulé, ces lignes de pliage 28 et de découpe forment des créneaux à cheval sur les lignes de pliage 38. Dès lors, lorsque les pans 31, 32, 33, 34 sont repliés selon ces lignes de pliage 38 puis que les rabats inférieurs 21, 22, 23, 24 sont repliés pour former le fond, ces créneaux forment des parois en L qui composent les pieds 40.

Dans l'exemple illustré, sur l'un des pans 34 est articulé un panneau supérieur 51 au moyen d'une ligne de pliage 58 parallèle aux lignes de pliage 28. Ce panneau supérieur 51 est lui-même équipé d'un rabat 52 qui se rattache à lui par une ligne de pliage 59 parallèle à la ligne de pliage 58.

Comme le montre la figure 1, ce panneau supérieur 51 et ce rabat 52 forment ensemble un couvercle 50 permettant de fermer le volume V1 d'accueil des déchets sur le haut. Le rabat 52 permet en particulier de maintenir le couvercle en position fermée.

On notera que les lignes de pliage 58, 59 du couvercle 50 sont partiellement interrompues par des lignes de découpe en forme de créneaux, qui permettent de maintenir le rabat 52 replié par rapport au panneau supérieur 51 et ce dernier replié par rapport au pan 34 auquel il se rattache.

Ici, le panneau supérieur 51 forme une paroi pleine en ce sens qu'il est dépourvu d'ouverture.

Au contraire, tant la paroi latérale 30 que le fond 20 présentent au moins une ouverture dite d'aération.

Ces ouvertures d'aération 25, 35 sont prévues pour faciliter la ventilation des déchets organiques et éviter la putréfaction de ces déchets.

Elles doivent être disposées de telle sorte que tous les déchets contenus dans le volume V1 puissent être aérés. Elles sont pour cela disposées de façon à garantir une ventilation selon un flux tant vertical qu'horizontal.

C'est à cet effet qu'il est prévu des ouvertures d'aération 35 en partie supérieure de la paroi latérale 30 (dans son quart supérieur) et dans le fond 20, ainsi que dans au moins deux pans opposés de la paroi latérale 30. Il est ici prévu des ouvertures d'aération dans les quatre pans.

Comme le montrent bien les figures 1 et 2, les ouvertures d'aération 35 sont réparties sur toute la hauteur et sur toute la largeur des pans de la paroi latérale 30.

Elles pourraient présenter des formes très variées si bien que leurs formes exactes ne seront pas ici décrites.

La taille de ces ouvertures d'aération 25, 35 est telle que ces dernières forment entre 10 et 40% de la surface totale de la paroi latérale 30. Ici, elles forment plus exactement entre 25 et 35% de cette surface. Autrement formulé, le rapport de la somme des surfaces des ouvertures d'aération 35 sur la somme des surfaces des pans de la paroi latérale 30 (intégrant tant les zones de matière que les zones des ouvertures) est sensiblement égal à 0,3.

Il est par ailleurs prévu quatre ouvertures 25 dans le fond 20, en plus des ouvertures issues des découpe des pieds 40. On notera sur la figure 3 que, puisque le fond 20 est formé par la superposition des quatre rabats inférieurs 21, 22, 23, 24, chacun de ces rabats présente deux ouvertures 25A, 25B, ces ouvertures étant prévues pour se superposer.

Ce bac de compostage 10 est conçu pour être lui-même jeté dans un réceptacle de compostage plus grand et pour s'y dégrader.

Afin d'accélérer ce processus de compostage, la paroi latérale 30 présente des lignes de découpe à mi-chair 39 distinctes des lignes de pliage précitées. Ces lignes de découpe à mi-chair 39 ne forment pas des lignes de pliage puisque leurs extrémités sont situées à distance des bords inférieur et supérieur de la paroi latérale 30 et des lignes de pliage précitées.

En pratique, deux des pans 31, 33 (les plus petits) comportent chacun quatre lignes de découpe à mi-chair 39 inclinées les unes par rapport aux autres pour former un X. Chacune de ces lignes présentent donc une extrémité à proximité de l'un des coins du pan correspondant, et une extrémité située à proximité de celles des autres lignes de découpe à mi-chair.

Ces lignes de découpe à mi-chair 39 permettent ainsi de fragiliser le bac de compostage 10 et d'accélérer la pénétration des fluides dans les couches internes du flan 100 en carton.

Ce bac de compostage 10 est conçu pour être utilisé dans une habitation. Pour éviter que du liquide ne s'écoule des déchets au travers des ouvertures d'aération 25, 35 jusque sur le plan de travail sur lequel le bac est posé, ce dernier est de préférence utilisé en combinaison avec un sac en matière composable, typiquement un sac en papier ou en plastique compostable (non illustré sur les figures).

Les dimensions de ce sac seront de préférence choisies de façon à être inférieures ou égales à celles du volume V1 d'accueil des déchets, tant en hauteur, qu'en largeur et en longueur.

A ce stade, on peut donner à titre d'exemple les dimensions du bac de compostage. Ces dimensions sont bien entendu données à titre illustratif puisqu'elles pourraient varier.

Les pans 31, 32, 33, 34 présentent, pour les deux plus larges, des largeurs L₃₂, L₃₄ de 200 mm environ et, pour les deux autres, des largeurs L₃₁, L₃₃ de 150 mm environ.

Leurs hauteurs H₃₀ sont toutes identiques et environ égales à 275 mm.

Le couvercle 50 présente la même largeur L₃₄ que celle du pan auquel il se rattache. Son panneau supérieur 51 présente une hauteur H₅₁ égale à la largueur L33 des petits pans 31, 33.

Les rabats inférieurs 21, 22, 23, 24 présentent des hauteurs H₂₀ de 120 mm environ.

Le flanc présente ainsi une largeur hors-tout L₁₀₀ et une hauteur hors-tout H₁₀₀ de respectivement 750 mm et 575 mm environ.

La présente invention n'est nullement limitée au mode de réalisation décrit et représenté, mais l'homme du métier saura y apporter toute variante conforme à l'invention.

Typiquement, la paroi latérale du bac pourrait comporter un nombre de pans différents (au moins égal à trois).

Selon une autre variante, le bac pourrait être dépourvu de couvercle, ou son couvercle pourrait être ajouré.

La paroi latérale du bac pourrait présenter des ouvertures dans uniquement deux de ses pans opposés.

## Revendications

1. Bac de compostage (10) réalisé à partir d'un flan (100) en papier ou en
carton prédécoupé, comportant :
- un fond (20), et
- une paroi latérale (30) qui s'étend à partir d'un bord périphérique du fond (20), d'un premier côté du fond (20), et qui délimite avec le fond (20) un volume (V1) d'accueil de matière à composter,
**caractérisé en ce qu'**il comporte en outre au moins un pied (40) qui s'étend à partir du fond (20), d'un côté opposé au premier côté, et qui permet de surélever le fond (20) par rapport à un plan de travail sur lequel le bac de compostage (10) est posé, **en ce que** la paroi latérale (30) et le fond (20) présentent chacun au moins une ouverture d'aération (25, 35) et
**en ce que** la paroi latérale (30) présente un bord inférieur et un bord supérieur, ainsi que des lignes de découpe à mi-chair (39) situées à distance des bords inférieur et supérieur.

2. Bac de compostage (10) selon la revendication 1, dans lequel ladite paroi latérale (30) comporte plusieurs pans (31, 32, 33, 34) dans chacun desquels il est prévu au moins une ouverture d'aération (35).

3. Bac de compostage (10) selon l'une des revendications 1 et 2, dans lequel lesdites ouvertures d'aération (25, 35) forment entre 10 et 40% de la surface totale de la paroi latérale (30).

4. Bac de compostage (10) selon l'une des revendications 1 à 3, dans lequel au moins une desdites ouvertures d'aération (35) est prévue dans une moitié de la paroi latérale (30) située à l'opposé du fond (20).

5. Bac de compostage (10) selon l'une des revendications 1 à 4, dans lequel ladite paroi latérale (30) comportant plusieurs pans (31, 32, 33, 34), il est prévu au moins deux lignes de découpe à mi-chair (39) qui forment un X sur au moins un desdits pans (31, 32, 33, 34).

6. Bac de compostage (10) selon l'une des revendications 1 à 5, dans lequel il est en outre prévu un couvercle (50) adapté à fermer la paroi latérale (30) d'un côté opposé audit fond (20).

7. Bac de compostage (10) selon la revendication 6, dans lequel le couvercle (50) comporte une paroi pleine (51) qui ferme entièrement ledit volume (V1).

8. Bac de compostage (10) selon l'une des revendications 1 à 7, dans lequel le flan (100) est formé d'un seul tenant.

9. Ensemble comportant un bac de compostage (10) conforme à l'une des revendications 1 à 8, et un sac en matière composable de dimensions inférieures ou égales à celles dudit volume (V1).
